# EUROPÄISCHE PATENTSCHRIFT

(11) **EP 2 090 947 B1**
(45) Veröffentlichungstag und Bekanntmachung des Hinweises auf die Patenterteilung: **18.08.2010**
(21) Anmeldenummer: 08002773.3
(22) Anmeldetag: 14.02.2008
(51) Int. Cl.: G05B 19/042, G05B 19/05, G06F 9/445

(54) **Verfahren zum Einstellen von Feldgeräte-Adressen**
Method for specifying field device addresses
Procédé destiné au réglage d'adresses d'appareils de terrain

(43) Veröffentlichungstag der Anmeldung: 19.08.2009
(73) Patentinhaber: SIEMENS AKTIENGESELLSCHAFT, 80333 München (DE)
(72) Erfinder: Rachut, Holger, 76149 Karlsruhe (DE); Winkler, Martin, 92256 Hahnbach (DE)

(56) Entgegenhaltungen:
- EP-A- 0 434 986
- WO-A-2007/149688
- DE-A1- 10 030 987

## Beschreibung

Die Erfindung betrifft ein Steuergerät für ein mehrere Feldgeräte umfassendes industrielles Kommunikationssystem. Darüber hinaus betrifft die Erfindung ein Interface-Modul, welches für einen Einsatz in einem derartigen Steuergerät geeignet ist.

Aus dem Siemens-Katalog "ST PCS 7 - März 2007", Prozessleitsystem SIMATIC PCS 7, Seiten 9/39 bis 9/46 ist ein industrielles Kommunikationssystem mit einem seriellen Feldbus in Form eines so genannten PROFIBUS PA (Process Automation) bekannt, über den Feldgeräte an eine Netzübergangseinheit angeschlossen sind. Diese Netzübergangseinheit ist über einen so genannten, für hohe Kommunikationsgeschwindigkeiten ausgelegten PROFIBUS DP (Decentralized Periphery) mit einer übergeordneten Einheit in Form eines Automatisierungssystems (Controller) verbunden. Zur Identifizierung der an diesem PROFIBUS PA angeschlossenen Feldgeräte ist eine eindeutige 7-Bit-Geräteadresse vorgesehen, wobei zwei Adressen reserviert sind und die Adressen 1 bis 125 zur Adressierung der Feldgeräte genutzt werden. Die Feldgeräte werden gewöhnlich mit einer Geräteadresse 0 ausgeliefert und es müssen daher vor dem Betrieb des Kommunikationssystems den Feldgeräten innerhalb eines Bussegmentes eindeutige Adressen vergeben werden. Dies geschieht in der Art und Weise, dass für jedes Feldgerät eine Adresse von 0 bis 125 manuell eingestellt wird. Dabei kann es vorkommen, dass beispielsweise in zwei Feldgeräten versehentlich die gleiche Adresse, z. B. die Adresse 46, eingestellt wird, wodurch es während des Betriebs zu Störungen kommen kann.

EP 0 434 986 A2 beschreibt ein Verfahren zur Inbetriebnahme einer an ein elektronisches Steuerungssystem angeschlossenen Baugruppe. Dieser wird eine physikalische Adresse übermittelt, mittels der die Baugruppe adressierbar ist. Maßnahmen zur Adressierung von Feldgeräten sind nicht vorgesehen.

An ein aus der DE 100 30 987 A1 bekanntes Steuergerät sind über einen so genannten CAN-Bus Sensoren angeschlossen, wobei Maßnahmen vorgesehen sind, welche eine eindeutige Identifikation dieser Sensoren ermöglichen.

Der vorliegenden Erfindung liegt die Aufgabe zugrunde, ein Steuergerät der eingangs genannten Art anzugeben, mit welchem die Einstellung von Feldgeräte-Adressen vereinfacht wird. Darüber hinaus ist ein Interface-Modul zu schaffen, welches für einen Einsatz in einem derartigen Steuergerät geeignet ist.

Im Hinblick auf das Steuergerät wird diese Aufgabe durch die im Anspruch 1 angegebenen und im Hinblick auf das Interface-Modul durch die im Anspruch 4 angegebenen Maßnahmen gelöst.

Vorteilhaft ist, dass die Einstellung der Feldgeräte-Adressen nicht manuell sondern automatisch erfolgt, wodurch fehlerhafte Adress-Einstellungen weitgehend vermieden werden. Für den Fall, dass ein defektes Feldgerät ausgetauscht werden muss, wird dem neuen Feldgerät automatisch die "richtige" Adresse des ausgetauschten Feldgerätes zugewiesen. Ein Service-Techniker braucht sich um die Einstellung der Adresse für das neue Feldgerät nicht zu kümmern; er muss lediglich sicherstellen, dass das neue Feldgerät an die Anschlüsse des Interface-Moduls angeschlossen wird, an welchen das ausgetauschte bzw. defekte Feldgerät angeschlossen war. Vorteilhaft ist ferner, dass jedes Feldgerät über einen seriellen Bus an das Interface-Modul angeschlossen ist. Eine Busunterbrechung wirkt sich daher nur auf das an diesen Bus angeschlossene Feldgerät aus, die Vorteile der Feldbustechnologie insbesondere im Hinblick auf Diagnose und/oder Fernabfrage der Feldgeräte (Aktoren, Sensoren) für die weiteren Feldgeräte können weiter genutzt werden.

Das Interface-Modul kann eine Baugruppe eines mehrere Baugruppen aufweisenden Automatisierungssystems sein. Das Interface-Modul kann aber auch als Baugruppe eines ebenfalls mehrere Baugruppen aufweisenden, für einen Anschluss von Aktoren und Sensoren vor Ort geeigneten dezentralen Peripheriegerätes ausgebildet sein. Vorteilhaft ist, dass dadurch beispielsweise PROFIBUS PA-Feldgeräte über jeweils einen PROFIBUS PA-Bus direkt an das Automatisierungssystem bzw. an das dezentrale Peripheriegerät angeschlossen werden können, ein PROFIBUS DP/PROFIBUS PA-Übergang ist nicht erforderlich.

Weitere vorteilhafte Ausgestaltungen der Erfindung ergeben sich aus den weiteren Unteransprüchen.

Anhand der Zeichnung, in der ein Ausführungsbeispiel der Erfindung veranschaulicht ist, werden im Folgenden die Erfindung, deren Ausgestaltungen sowie Vorteile näher erläutert.

Es zeigen:
- Figur 1: Bestandteile eines industriellen Kommunikations- systems und
- Figur 2: ein Interface-Modul eines dezentralen Peripherie- gerätes.

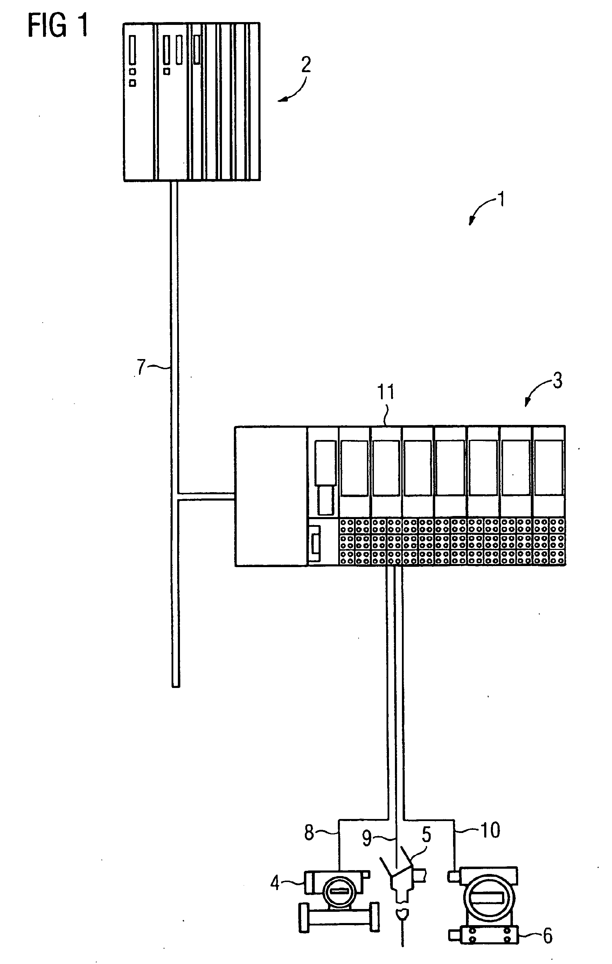

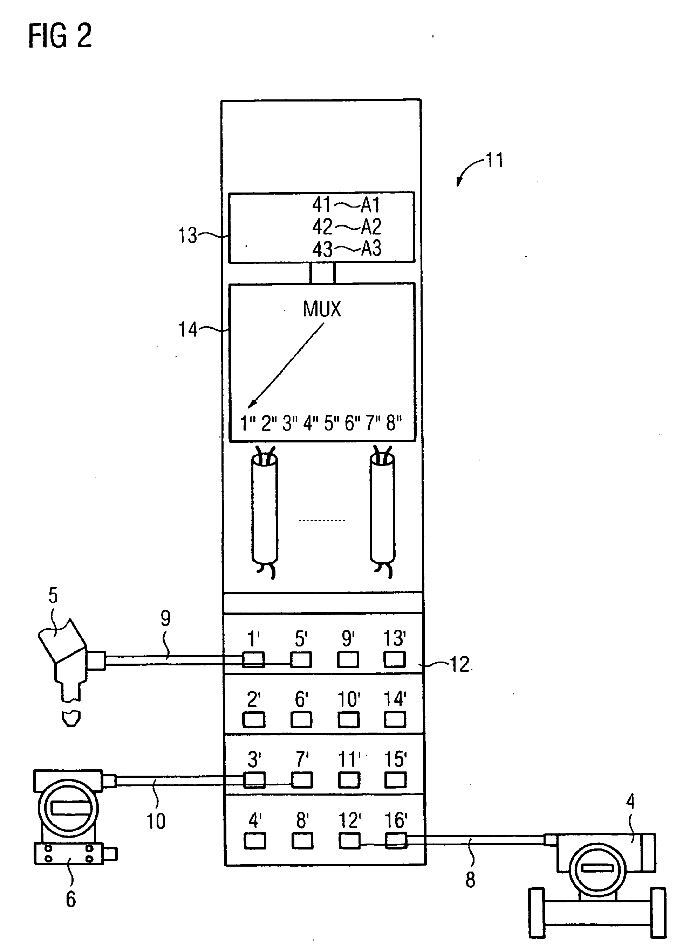

Die in den Figuren 1 und 2 dargestellten gleichen Teile sind mit gleichen Bezugszeichen versehen.

In Figur 1 ist mit 1 ein industrielles Kommunikationssystem bezeichnet, welches ein Automatisierungssystem 2, ein dezentrales Peripheriegerät 3 und mehrere Feldgeräte 4, 5, 6 aufweist. Das Automatisierungssystem 2 sowie das dezentrale Peripheriegerät 3 ist mit mehreren über einen hier nicht dargestellten Rückwandbus verbundenen Modulen bzw. Baugruppen versehen, z. B. Baugruppen in Form von CPU-, Regler- und/oder Ein-/Ausgabe- und/oder sonstigen Funktions-Baugruppen. Selbstverständlich kann das Kommunikationssystem 1 je nach einer zu lösenden Steuerungsaufgabe mit weiteren Automatisierungssystemen und/oder dezentralen Peripheriegeräten versehen sein. Darüber hinaus kann das Automatisierungssystem 2 über einen hier nicht dargestellten Bus mit Engineeringsystemen, Bedien- und Beobachtungssystemen, Asset-Management-Systemen und/oder für ein Prozessleitsystem geeigneten Servern verbunden sein. Das Automatisierungssystem 2 ist über einen für hohe Kommunikationsgeschwindigkeiten ausgelegten Feldbus 7, z. B. in Form eines an sich bekannten Feldbusses "PROFIBUS DP", an das dezentrale Peripheriegerät 3 angeschlossen. Mit jeweils einem weiteren für die Prozessautomatisierung geeigneten Feldbus 8, 9, 10, z. B. in Form eines an sich bekannten Feldbusses "PROFIBUS PA", sind die Feldgeräte 4, 5, 6 an ein Interface-Modul 11 des dezentralen Peripheriegerätes 3 angeschlossen. Im Unterschied zum Feldbus "PROFIBUS DP", welcher für hohe Kommunikationsgeschwindigkeiten ausgelegt und für eine Kommunikation zwischen Automatisierungssystemen und dezentralen Peripheriegeräten optimiert ist, berücksichtigt der Feldbus "PROFIBUS PA" die Anforderungen im Hinblick auf die Prozessautomatisierung, z. B. Anforderungen im Hinblick auf die Eigensicherheit des Übertragungsverfahrens oder die Versorgung der Feldgeräte über das Buskabel. Das Interface-Modul 11 vergibt den an die Feldbusse 8, 9, 10 angeschlossenen Feldgeräten 4, 5, 6 vor dem Betrieb des Kommunikationssystems 1 oder zu vorgebbaren Zeiten eindeutige Adressen A1, A2, A3; im Ausführungsbeispiel sind dies die Adressen 41, 42, 43.

In diesem Zusammenhang wird auf Figur 2 verwiesen, in welcher das Interface-Modul 11 des dezentralen Peripheriegerätes 3 gemäß Figur 1 dargestellt ist.
Das Interface-Modul 11 weist im vorliegenden Ausführungsbeispiel einen Klemmblock 12 mit sechzehn Anschlüssen 1', 2', ..., 16' auf, wobei das Adernpaar des Feldbusses 8 an die Anschlüsse 12', 16', das Adernpaar des Feldbusses 9 an die Anschlüsse 1', 5' und das Adernpaar des Feldbusses 10 an die Anschlüsse 3', 7' angeschlossen sind.
Es wird angenommen, dass im Kommunikationssystem 1 auf das Feldgerät 4 mit der Adresse 41, auf das Feldgerät 5 mit der Adresse 42 und auf das Feldgerät 6 mit der Adresse 43 zugegriffen werden soll. Eine Adress-Einstelleinheit 13 schaltet einen acht Kanäle 1" , 2" , ..., 8" aufweisenden Multiplexer 14 derart, dass nacheinander die Feldgeräte 4, 5, 6 mit dem jeweiligen Feldbus 8, 9, 10 verbunden sind. Dadurch wird ermöglicht, dass die Adress-Einstelleinheit 13 in den Feldgeräten 4, 5, 6 hinterlegte Adressen einliest, welche diese Adressen mit den zu vergebenden bzw. vorgegebenen Feldgeräte-Adressen 41, 42, 43 vergleicht. Angenommen, die Adress-Einstelleinheit 13 liest für das Feldgerät 4 die Adresse 41 und für die Feldgeräte 5, 6 jeweils die Adresse 0 ein, so erkennt die Adress-Einstelleinheit 13, dass in dem Feldgerät 4 bereits die gewünschte Feldgeräte-Adresse 41 hinterlegt ist, die Adressen in den Feldgeräten 5, 6 allerdings geändert werden müssen. Aufgrund dessen schreibt die Adress-Einstelleinheit 13 die Feldgeräte-Adresse 42 über den Feldbus 9 dem Feldgerät 5 und die Feldgeräte-Adresse 43 über den Feldbus 10 dem Feldgerät 6 ein, wobei zur Übertragung der jeweiligen Adressen 42, 43 die Adress-Einstelleinheit 13 den Multiplexer 14 entsprechend einstellt. Die ursprünglich in den Feldgeräten 5, 6 hinterlegten Adressen 0 wurden somit durch die "neuen" Adressen 42, 43 überschrieben bzw. ersetzt und ein Schreib- bzw. Lesezugriff durch das dezentrale Peripheriegerät 3 auf die Feldgeräte 5, 6 erfolgt mit diesen "neuen" Adressen.

## Patentansprüche

1. Steuergerät für ein industrielles Kommunikationssystem (1), das mehrere an das Steuergerät angeschlossene Feldgeräte (4, 5, 6) umfasst, wobei ein Interface-Modul (11) des Steuergerätes (3) mit einer Adress-Einstelleinheit (13) versehen ist, welche die aktuellen in den Feldgeräten (4, 5, 6) hinterlegten Adressen einliest und mit vorgegebenen in der Adress-Einstelleinheit (13) hinterlegten Feldgeräte-Adressen (A1, A2, A3) vergleicht, wobei die Adress-Einstelleinheit (13) in Abhängigkeit des jeweiligen Vergleichsergebnisses die jeweilige Feldgeräte-Adresse (A1, A2, A3) in das jeweilige Feldgerät (4, 5, 6) einschreibt, wobei
die Feldgeräte (4, 5, 6) über einen Multiplexer (14) des Interface-Moduls (11) an das Steuergerät (3) angeschlossen sind und dass für jedes der Feldgeräte (4, 5, 6) ein serieller Bus (8, 9, 10) zum Anschluss an den Multiplexer (14) vorgesehen ist.

2. Steuergerät nach Anspruch 1, **dadurch gekennzeichnet, dass** das Steuergerät ein mehrere Baugruppen aufweisendes Automatisierungssystem (2) ist.

3. Steuergerät nach Anspruch 1, **dadurch gekennzeichnet, dass** das Steuergerät ein mehrere Baugruppen aufweisendes dezentrales Peripheriegerät (3) ist.

4. Interface-Modul für ein Steuergerät (3) nach einem der Ansprüche 1 bis 3, wobei das Interface-Modul (11) mit einer Adress-Einstelleinheit (13) versehen ist, welche die aktuellen in den Feldgeräten (4, 5, 6) hinterlegten Adressen einliest und mit vorgegebenen in der Adress-Einstelleinheit (13) hinterlegten Feldgeräte-Adressen (A1, A2, A3) vergleicht, wobei die Adress-Einstelleinheit (13) in Abhängigkeit des jeweiligen Vergleichsergebnisses die jeweilige Feldgeräte-Adresse (A1, A2, A3) in das jeweilige Feldgerät (4, 5, 6) einschreibt, wobei die Feldgeräte (4, 5, 6) über einen Multiplexer (14) des Interface-Moduls (11) an das Steuergerät (3) angeschlossen sind und dass für jedes der Feldgeräte (4, 5, 6) ein serieller Bus (8, 9, 10) zum Anschluss an den Multiplexer (14) vorgesehen ist.

## Claims

1. Controller for an industrial communication system 1, which comprises a plurality of field devices (4, 5, 6) connected to the controller, wherein an interface module (11) of the controller (3) is provided with an address setting unit (13), which reads the current addresses stored in the field devices (4, 5, 6) and compares them with predetermined field device addresses (A1, A2, A3) stored in the address setting unit (13), wherein the address setting unit (13) writes the respective field device address (A1, A2, A3) to the respective field device (4, 5, 6) as a function of the respective comparison result, wherein the field devices (4, 5, 6) are connected to the controller (3) via a multiplexer (14) of the interface module (11), and wherein a serial bus (8, 9, 10) for connection to the multiplexer (14) is provided for each of the field devices (4, 5, 6).

2. Controller according to Claim 1, **characterized in that** the controller is an automation system (2) having a plurality of assemblies.

3. Controller according to Claim 1, **characterized in that** the controller is a local peripheral (3) having a plurality of assemblies.

4. Interface module for a controller (3) according to one of Claims 1 to 3, wherein the interface module (11) is provided with an address setting unit (13), which reads the current addresses stored in the field devices (4, 5, 6) and compares them with predetermined field device addresses (A1, A2, A3) stored in the address setting unit (13), wherein the address setting unit (13) writes the respective field device address (A1, A2, A3) to the respective field device (4, 5, 6) as a function of the respective comparison result, wherein the field devices (4, 5, 6) are connected to the controller (3) via a multiplexer (14) of the interface module (11), and wherein a serial bus (8, 9, 10) for connection to the multiplexer (14) is provided for each of the field devices (4, 5, 6).

## Revendications

1. Appareil de commande pour un système ( 1 ) de communication industriel, qui comprend plusieurs appareils ( 4, 5, 6 ) de terrain raccordés à l'appareil de commande, un module ( 11 ) d'interface de l'appareil ( 3 ) de commande étant pourvu d'une unité ( 13 ) de réglage d'adresses, qui lit les adresses actuelles mémorisées dans les appareils ( 4, 5, 6 ) de terrain et les compare à des adresses ( A1, A2, A3 ) d'appareils de terrain prescrites, mémorisées dans l'unité ( 13 ) de réglage d'adresses, dans lequel l'unité ( 13 ) de réglage d'adresses inscrit les adresses ( A1, A2, A3 ) d'appareils de terrain respectives, en fonction du résultat respectif de la comparaison, dans l'appareil ( 4, 5, 6 ) de terrain respectif, les appareils ( 4, 5, 6 ) de terrain sont raccordés à l'appareil ( 3 ) de commande par un multiplexeur ( 14 ) de module ( 11 ) d'interface et en ce qu'il est prévu pour chacun des appareils ( 4, 5, 6 ) de terrain un bus ( 8, 9, 10 ) série pour le raccordement au multiplexeur ( 14 ).

2. Appareil de commande suivant la revendication 1, **caractérisé en ce que** l'appareil de commande est un système ( 2 ) d'automatisation comportant plusieurs modules.

3. Appareil de commande suivant la revendication 1, **caractérisé en ce que** l'appareil de commande est un appareil ( 3 ) périphérique décentralisé comportant plusieurs modules.

4. Module d'interface pour un appareil ( 3 ) de commande suivant l'une des revendications 1 à 3, dans lequel le module ( 11 ) d'interface est pourvu d'une unité ( 13 ) de réglage d'adresses, qui lit les adresses actuelles mémorisées dans les appareils ( 4, 5, 6 ) de terrain et les compare à des adresses ( A1, A2, A3 ) d'appareils de terrain prescrites mémorisées dans l'unité ( 13 ) de réglage d'adresses, dans lequel l'unité ( 13 ) de réglage d'adresses inscrit les adresses ( A1, A2, A3 ) d'appareils de terrain respectives, en fonction du résultat respectif de la comparaison, dans l'appareil ( 4, 5, 6 ) de terrain respectif, les appareils ( 4, 5, 6 ) de terrain étant raccordés à l'appareil ( 3 ) de commande par un multiplexeur ( 14 ) de module ( 11 ) d'interface et en ce qu'il est prévu pour chacun des appareils ( 4, 5, 6 ) de terrain un bus ( 8, 9, 10 ) série pour le raccordement au multiplexeur ( 14 ).
